# EUROPÄISCHE PATENTSCHRIFT

(11) **EP 1 046 855 B1**
(45) Veröffentlichungstag und Bekanntmachung des Hinweises auf die Patenterteilung: **29.06.2005**
(21) Anmeldenummer: 00107947.4
(22) Anmeldetag: 14.04.2000
(51) Int. Cl.: F16L 37/12, F16L 37/14, F16J 15/08

(54) **Schnellkupplung**
Quick-acting coupling
Raccord rapide

(30) Priorität: 21.04.1999 DE 19918174
(43) Veröffentlichungstag der Anmeldung: 25.10.2000
(73) Patentinhaber: Eaton Fluid Power GmbH, 76532 Baden-Baden (DE)
(72) Erfinder: Twardawski, Harald, 76437 Rastatt (DE); Luft, Thomas, 76185 Karlsruhe (DE)
(74) Vertreter: Gleiss, Alf-Olav, Dr.jur. Dipl.-Ing.

(56) Entgegenhaltungen:
- DE-A- 2 050 868
- DE-A- 19 715 293
- DE-A- 19 812 544
- US-A- 2 969 998
- US-A- 4 361 335
- US-A- 5 472 016
- US-A- 5 570 910

## Beschreibung

Die Erfindung betrifft eine Schnellkupplung gemäß Oberbegriff des Anspruchs 1.

Schnellkupplungen der hier angesprochenen Art sind bekannt. Sie dienen dazu, eine Verbindung zwischen zwei von einem Medium durchströmbaren Hohlkörpern herzustellen. Sie bestehen im wesentlichen aus einem Steckteil und einem Hülsenteil, wobei zum Herstellen der Verbindung das Steckteil in das Hülsenteil eingeführt wird. Zur Sicherstellung einer dichtenden Verbindung zwischen dem Steckteil und dem Hülsenteil weisen Schnellkupplungen des weiteren Dichtelemente auf. Diese sind vorzugsweise ringförmig ausgebildet und werden üblicherweise über das Steckteil geschoben, bevor das Steckteil in das Hülsenteil eingeführt wird. Es ist jedoch auch denkbar, das Dichtelement zuerst in das Hülsenteil einzubringen, bevor das Steckteil in das Hülsenteil eingeschoben wird.

In DE 2050868 A ist eine Dichtung für zerlegbare Rohrleitungen beschrieben, die eine Schnellkupplung mit einem Steckteil, einem Hülsenteil und mindestens einem Dichtelement aufweist, wobei das Dichtelement zwei sich von einem elastischen Verbindungsabschnitt erstreckende Lippen umfasst.

Es sind Dichtelemente mit vielerlei Querschnittskonturen bekannt, beispielsweise ringförmige, polygonförmige, unter anderem dreieck- oder viereckförmige. Es hat sich herausgestellt, dass die Schnellkupplung in einigen Betriebsfällen undicht wird und ein Austausch der Schnellkupplung, zumindest der Dichtelemente der Kupplung, erforderlich wird.

Es ist daher Aufgabe der Erfindung, eine Schnellkupplung zu schaffen, die diesen Nachteil nicht aufweist.

Diese Aufgabe wird durch eine Schnellkupplung gelöst, welche die in Anspruch 1 genannten Merkmale aufweist. Die Schnellkupplung zeichnet sich durch ein J-förmiges Dichtelement mit einem elastischen Verbindungsabschnitt und zwei Lippen aus, die sich von dem Verbindungsabschnitt aus erstrecken. Das Dichtelement hat bei gelöster Schnellkupplung - im Querschnitt betrachtet - im Wesentlichen eine J-förmige Gestalt. Er besitzt also mindestens eine gebogene Lippe, die vom Verbindungsabschnitt im Wesentlichen zur Mittelachse der Schnellkupplung weist. Eine Lippe erstreckt sich im Wesentlichen rechtwinklig zu der anderen Lippe und von dem Verbindungsabschnitt weg. Durch die spezielle Ausgestaltung des Dichtelements der Schnellkupplung ist eine verlustfreie Abdichtung zwischen dem Steck- und dem Hülsenteil der Schnellkupplung möglich. Während bei herkömmlichen Abdichtungen mit elastomeren Dichtelementen einer der maßgeblichsten Parameter für die Dichtheit der Verbindung der Druckverformungsrest (DVR) beziehungsweise die Spannungsrelaxation und die Rückstellkraft sind, kann beim hier vorgestellten Dichtelement gewährleistet werden, dass die beiden Lippen des Dichtelements durch den elastischen Verbindungsabschnitt so miteinander verbunden sind, dass sich das Dichtelement elastisch federnd an das Steckteil beziehungsweise das Hülsenteil anlegt, auch wenn die Schnellkupplung mehrfach geöffnet und geschlossen wurde.

Aufgrund des Verbindungsabschnitts können sehr gute Federkräfte innerhalb des Dichtelements realisiert werden, so dass dieses beim Schließen der Schnellkupplung elastisch federnd zusammengedrückt werden kann, ohne dass es zu einer plastischen Deformation kommt, die zu einer bleibenden Verformung des Dichtelements führt, und damit ein dichter Abschluss beim Öffnen und Wiederverschließen der Schnellkupplung nicht gewährleistet ist.

Die gebogene Lippe wird beim Schließen der Schnellkupplung weiter umgebogen und ist gekennzeichnet durch hohe Rückstellkräfte, die eine besonders gute Dichtwirkung ermöglichen.

Bei einer Schnellkupplung, die nicht Gegenstand der Erfindung ist, aber das Verständnis der Erfindung erleichtert, ist vorgesehen, dass sich der Verbindungsabschnitt über einen Kreisbogen bei gelöster Schnellkupplung über einen Winkel von 200° bis 360° erstreckt. Dieser große Bogen des Verbindungsabschnitts gewährleistet eine große Elastizität der beiden Lippen des Dichtelements, auch nach mehrfachem Betätigen der Schnellkupplung.

Bei einer weiteren Schnellkupplung, die nicht Gegenstand der Erfindung ist, aber das Verständnis der Erfindung erleichtert, stehen die beiden Lippen im Wesentlichen unter einem stumpfen Winkel, vorzugsweise rechtwinklig, von den Enden des Verbindungsabschnitts ab. Es ergibt sich somit ein besonders großer Abstand zwischen den beiden Lippen, so dass diese auch einen großen Dichtungsbereich überspannen können.

Ein bevorzugtes Ausführungsbeispiel der Schnellkupplung weist im Hülsenteil eine ringförmig umlaufende Nut und im Steckteil einen ringförmig umlaufenden ersten Schrägbereich auf. Bei geschlossener Schnellkupplung stützt sich eine Lippe des Dichtelementes am Grund der Nut des Hülsenteils und die andere an dem ersten Schrägbereich des Steckteils ab. Durch diese Ausgestaltung der Oberflächen des Steckteils beziehungsweise des Hülsenteils wird das Herausdrücken des Steckteils aus dem Hülsenteil bei nicht ordnungsgemäß vollständig geschlossener Schnellkupplung besonders begünstigt, wodurch gleichzeitig dem Anwender der korrekte Sitz des Steckteils im Hülsenteil angezeigt wird (Indikation).

Bei einem weiteren bevorzugten Ausführungsbeispiel der Erfindung ist der Schnellkupplung ein Halteelement zugeordnet, das sich bei gelöster Schnellkupplung an einer Ausnehmung im Hülsenteil und an dem ersten Schrägbereich des Steckteils abstützt. Das Halteelement dient zur axialen Fixierung der Schnellkupplung beim Einführen des Steckteils in das Hülsenteil. Das Halteelement, das bevorzugt J-förmig ausgestaltet ist, stützt sich bei geschlossener Schnellkupplung an dem ersten Schrägbereich des Hülsenteils und an einem zweiten Schrägbereich des Steckteils ab.

Bei einem weiteren Ausführungsbeispiel der Schnellkupplung sind die Oberflächen des Steckteils und des Hülsenteils so ausgestaltet und aufeinander abgestimmt, dass bei nicht vollständig geschlossener Schnellkupplung durch die Federwirkung des Dichtelements das Steckteil aus dem Hülsenteil herausgedrückt wird. Die Oberfläche des Steckteils weist hierzu einen Schrägbereich auf, mit dem das Dichtelement zusammenwirkt.

Ein bevorzugtes Ausführungsbeispiel der Schnellkupplung zeichnet sich dadurch aus, dass das die Schnellkupplung durchströmende Medium in verschiedenen Aggregatszuständen vorliegen kann. Das Medium kann eine Flüssigkeit, vorzugsweise ein Kältemittel wie R12, R134-a, ein Hydrauliköl, beispielsweise ATF, Pentosin, ein sonstiges Öl (Motorenöl, Getriebeöl), Kraftstoff (Ottokraftstoff, Dieselkraftstoff, Kerosin), Wasser oder dergleichen sein. Die Schnellkupplung kann jedoch auch von einem gasförmigen Medium, vorzugsweise Luft, Kohlendioxid, Propan oder Isobutan durchströmt werden.

Weitere Ausgestaltungen ergeben sich aus den übrigen Unteransprüchen.

Die Erfindung wird im folgenden anhand der Zeichnung näher erläutert wobei die Figuren 5-12 Schnellkupplungen zeigen, die nicht Gegenstand der Erfindung sind, aber das Verständnis der Erfindung erleichtern. Es zeigen:
- Figur 1: die obere Hälfte einer Schnellkupplung im gelösten Zustand mit einem J-förmigen Dichtelement;
- Figur 2: die Schnellkupplung gemäß Figur 1 im geschlossenen Zustand;
- Figur 3: das in Figur 1 und 2 dargestellte Dichtelement im unverformten Zustand und
- Figur 4: das Dichtelement gemäß Figur 3 im verformten Zustand;
- Figur 5: die obere Hälfte einer Schnellkupplung im gelösten Zustand im Längsschnitt;
- Figur 6: die obere Hälfte einer Schnellkupplung im geschlossenen Zustand im Längsschnitt;
- Figur 7: ein Dichtelement einer Schnellkupplung im unverformten Zustand;
- Figur 8: das Dichtelement von Figur 7 im verformten Zustand;
- Figur 9: eine Schnellkupplung im gelösten Zustand mit einem Dichtelement;
- Figur 10: die Schnellkupplung von Figur 9 im geschlossenen Zustand;
- Figur 11: das in Figur 9 und 10 dargestellte Dichtelement im unverformten Zustand;
- Figur 12: das Dichtelement gemäß Figur 11 im verformten Zustand;

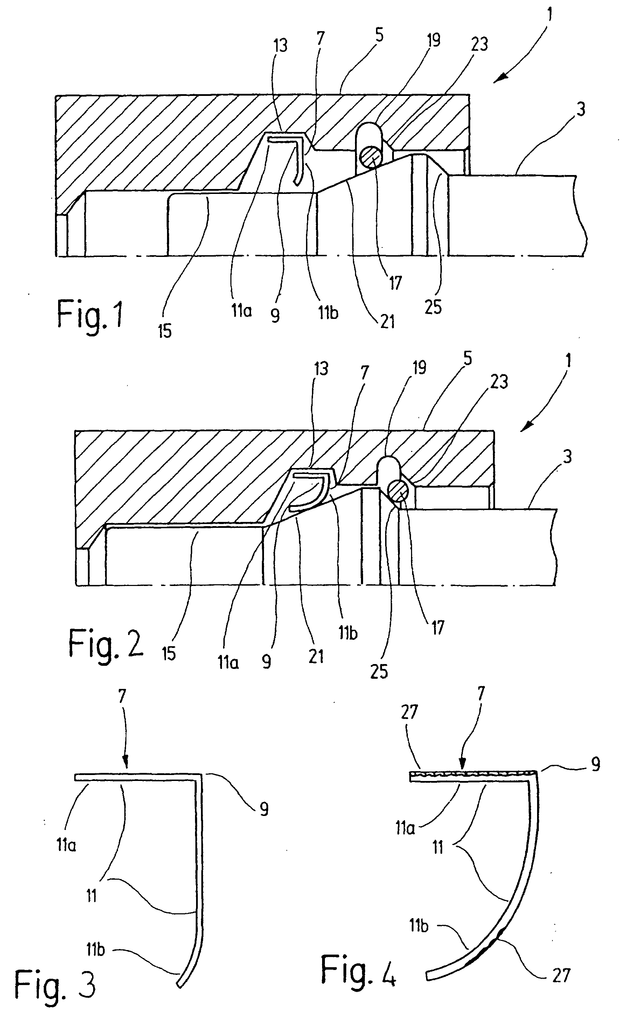

Figur 1 zeigt die obere Hälfte einer Schnellkupplung 1 im Längsschnitt. Die Schnellkupplung 1 umfasst ein Steckteil 3 und ein Hülsenteil 5. Figur 1 zeigt hierbei die Schnellkupplung 1 im gelösten Zustand, das heißt das Steckteil 3 ist nicht vollständig in das Hülsenteil 5 eingeschoben. Zwischen dem Steckteil 3 und dem Hülsenteil 5 befindet sich ein J-förmiges Dichtelement 7. In der in Figur 1 dargestellten Schnellkupplung sind deutlich ein Verbindungsabschnitt 9 und die sich von dessen Enden weg erstreckenden Lippen 11a und 11 b des Dichtelements 7 zu erkennen. Der obere Teil des Verbindungsabschnitts 9 und das Ende der oberen Lippe 11a stehen in Berührverbindung mit dem Grund einer in die Innenfläche des Hülsenteils 5 eingebrachten Nut 13. In Figur 1 ist des weiteren ein Halteelement 17, eine das Halteelement 17 aufnehmende, im Hülsenteil 5 vorgesehene Ausnehmung 19 sowie ein das Halteelement 17 abstützender erster Schrägbereich 21 des Steckteils 3 zu erkennen.

Figur 2 zeigt die Schnellkupplung 1 in geschlossenem Zustand. Gleiche Teile sind mit gleichen Bezugszeichen wie in Figur 1 versehen, so dass insofern auf die Beschreibung der Figur 1 verwiesen wird. Das J-förmig gekrümmte Dichtelement 7 befindet sich nun im verformten Zustand. Die beiden Lippen 11 a, 11b sind näher zusammengerückt, während der Verbindungsabschnitt 9 weiter zusammengebogen ist. Figur 2 lässt ebenfalls erkennen, dass sich als Dichtabschnitte wirkende Bereiche der oberen Lippe 11a und des oberen Teils des Verbindungsabschnitts 9 an der Nut 13, das Ende der unteren Lippe 11b an dem vorderen Bereich 15 und der Dichtabschnitt im unteren Teil des Verbindungsabschnitts 9 an dem ersten Schrägbereich 21 des Steckteils 3 abstützen. Ebenfalls zu ersehen ist, dass das Halteelement 17 auf einem zweiten Schrägbereich 25 des Steckteils 3 aufliegt. Es ist erkennbar, dass insbesondere die Nut 13 im Hülsenteil 5 einen im Wesentlichen zylindrischen Bereich aufweist, an dem die obere Lippe 11a des Dichtelements 7 anliegt. Die Nut 13 ist also so ausgestaltet, dass eine optimale Aufnahme der oberen Lippe 11a des Dichtelements 7 sichergestellt ist.

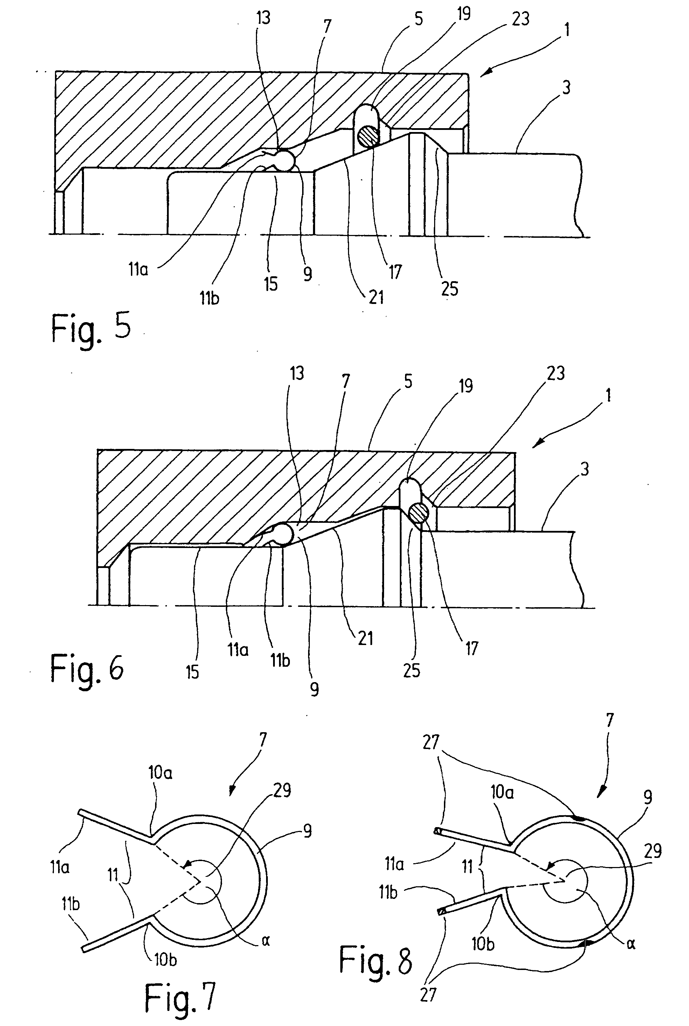

Die Figuren 3 und 4 zeigen das im Wesentlichen J-förmig ausgebildete Dichtelement 7 der in den Figuren 1 und 2 dargestellten Schnellkupplung. In Figur 4 ist deutlich zu erkennen, dass sich der Dichtabschnitt 27 der oberen Lippe 11a entlang der gesamten Länge der oberen Lippe 11a erstreckt. Im gelösten und ungelösten Zustand der Schnellkupplung ist die obere Lippe 11a gestreckt, das heißt also sie verläuft geradlinig, während die untere Lippe 11b nur im unteren Bereich gebogen ist, wenn das Dichtelement 7 unbelastet, die Schnellkupplung also gelöst ist. Im zusammengesteckten Zustand wird die Lippe 11b über einen größeren Bereich ihrer Länge umgebogen, was deutlich aus Figur 4 ersichtlich ist.

Figur 5 zeigt die obere Hälfte einer Schnellkupplung 1 im Längsschnitt, wobei Figur 5 ein Beispiel zeigt, welches nicht Gegenstand der Erfindung ist, sondern zum besseren Verständnis der Erfindung dient. Die Schnellkupplung 1 umfasst ein Steckteil 3 und ein Hülsenteil 5. Figur 5 zeigt hierbei die Schnellkupplung 1 im gelösten Zustand, das heißt das Steckteil 3 ist nicht vollständig in das Hülsenteil 5 eingeschoben. Zwischen dem Steckteil 3 und dem Hülsenteil 5 befindet sich ein ringförmiges Dichtelement 7. In dem in Figur 5 dargestellten Ausführungsbeispiel der Schnellkupplung sind deutlich ein Verbindungsabschnitt 9 und die sich von dessen Enden weg erstreckenden Lippen 11 a und 11 b des Dichtelements 7 zu erkennen. Der obere Teil des Verbindungsabschnitts 9 und das Ende der oberen Lippe 11a stehen in Berührverbindung mit dem Grund einer in die Innenfläche des Hülsenteils 5 eingebrachten Nut 13. Der untere Teil des Verbindungsabschnitts 9 und das Ende der unteren Lippe 11 b liegen an einem vorderen Bereich 15 des Steckteils 3 an. In Figur 5 ist des weiteren ein Halteelement 17, eine das Halteelement 17 aufnehmende, im Hülsenteil 5 vorgesehene Ausnehmung 19 sowie ein das Halteelement 17 abstützender erster Schrägbereich 21 des Steckteils 3 zu erkennen.

Figur 6 zeigt die Schnellkupplung 1 in geschlossenem Zustand. Gleiche Teile sind mit gleichen Bezugszeichen wie in Figur 5 versehen, so dass insofern auf die Beschreibung der Figur 5 verwiesen wird. Das Dichtelement 7 befindet sich nun im verformten Zustand. Die beiden Lippen 11 sind näher zusammengerückt, während der kreisbogenförmig gekrümmte Verbindungsabschnitt 9 weiter zusammengebogen ist. Figur 6 lässt ebenfalls erkennen, dass sich als Dichtabschnitte wirkende Bereiche der oberen Lippe 11a und des oberen Teils des Verbindungsabschnitts 9 an der Nut 13, das Ende der unteren Lippe 11 b an dem vorderen Bereich 15 und der Dichtabschnitt im unteren Teil des Verbindungsabschnitts 9 an dem ersten Schrägbereich 21 des Steckteils 3 abstützen. Ebenfalls zu ersehen ist, dass das Halteelement 17 auf einem zweiten Schrägbereich 25 des Steckteils 3 aufliegt.

In Figur 7 ist das anhand der Figuren 5 und 6 erläuterte, dem griechischen Buchstaben Q ähnliche Dichtelement 7 vergrößert dargestellt. Es ist deutlich zu erkennen, dass sich von dem im wesentlichen kreisbogenförmigen Verbindungsabschnitt 9 die obere Lippe 11a und die untere Lippe 11 b wegerstrecken. Ebenfalls verständlich wird durch Figur 3 die Definition des Zentralwinkels α: Seine Schenkel sind die Verbindungslinien zwischen einem Mittelpunkt 29 und einem oberen Ende 10a beziehungsweise einem unteren Ende 10b des kreisbogenförmigen Verbindungsabschnitts 9.

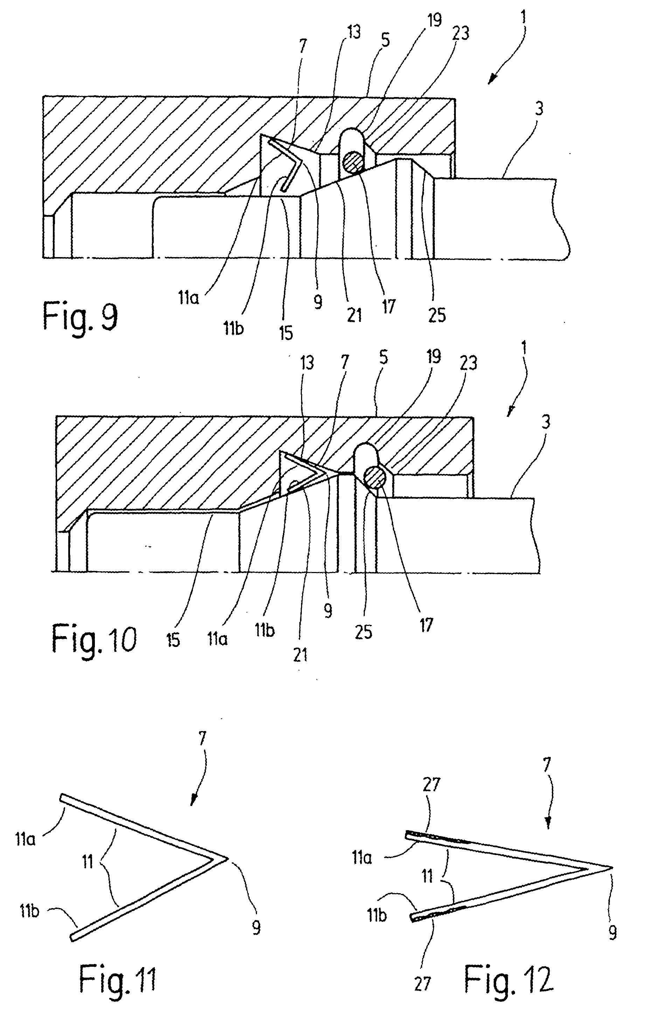

Figur 8 zeigt das Dichtelement 7 im verformten Zustand. Gleiche Teile tragen die gleichen Bezugszeichen wie in Figur 7. Es ist zu erkennen, dass bei verformtem Dichtelement 7 der Zentralwinkel α größer ist als bei unverformtem Dichtelement 7. Ferner zeigt Figur 8 Dichtabschnitte 27. Es sind dies die Bereiche des Dichtelements 7, die bei geschlossener Schnellkupplung 1 mit der Oberfläche des Steckteils 3 beziehungsweise des Hülsenteils 5 in Berührverbindung stehen. Es ist zu erkennen, dass die obere Lippe 11a und die untere Lippe 11 b näher zusammengerückt sind.

Die in den Figuren 9, 10, 11 und 12 dargestellten Schnellkupplungen, die nicht Bestandteil des Erfindungsgegenstandes sind, entsprechen den Schnellkupplungen der Figuren 5, 6, 7 und 8. Gleiche Teile sind mit gleichen Bezugszeichen wie in den Figuren 5 bis 8 versehen. Bei der in den Figuren 9 bis 12 dargestellten Schnellkupplung stoßen die beiden Lippen 11a, 11b direkt aneinander. Der Verbindungsabschnitt 9 reduziert sich hier also im wesentlichen auf den Bereich, in dem die Enden der beiden Lippen 11a, 11b einander berühren. Dies hat den Vorteil, dass das Dichtelement 7 ein geringeres Gewicht aufweist, weniger Volumen einnimmt und auch einfach und preiswert herzustellen ist. In den Figuren 9 und 10 ist zu erkennen, dass die Nut 13, an der die obere Lippe 11a aufliegt, anders ausgestaltet ist als in den Figuren 5 und 6. Hierdurch wird das Herausdrücken des Steckteils aus dem Hülsenteil bei nicht ordnungsgemäß vollständig geschlossener Schnellkupplung besonders gefördert, die Anzeige des korrekten Sitzes des Steckteils im Hülsenteil wird also im besonderen Maße unterstützt.

Figur 11 zeigt das im Wesentlichen V-förmig ausgebildete Dichtelement 7, das in den Schnellkupplungen gemäß der Figuren 9 und 10 Verwendung findet. Es ist gut zu erkennen, dass der Verbindungsabschnitt 9 nur den Bereich umfasst, in dem die Enden der beiden Lippen 11 a, 11 b zusammentreffen.

Figur 12 zeigt das Dichtelement 7 der Figur 11 im verformten Zustand. Gut sichtbar ist, dass sich die Dichtabschnitte 27 der Lippen 11a, 11b - in Übereinstimmung mit den in Figur 10 erkennbaren anderen Berührpunkten mit der Oberfläche des Steckteils 3 und des Hülsenteils 5 - an anderer Stelle, in diesem Fall an den äußeren Enden der Lippen 11a, 11 b befinden.

Allen in den Figuren 1 bis 12 dargestellten Schnellkupplungen ist gemeinsam, dass das Dichtelement 7 relativ dünnwandig ausgebildet sein kann und daher sehr leicht ist. Daher ist der Materialeinsatz relativ gering.

Es zeigt sich auch, dass das Dichtelement 7 so ausgebildet ist, dass die Lippen 11a und 11b quasi einen Innenraum des Dichtelements 7 umschließen. Das Dichtelement ist so innerhalb der Schnellkupplung 1 angeordnet, dass dieser Innenraum bei Verwendung der Schnellkupplung druckbeaufschlagt ist. Dieser Druck unterstützt die aufgrund der Federwirkung des Verbindungsabschnitts 9 ohnehin gegebene Aufspreizung des Dichtelements 7, so dass die Lippen 11a und 11b dichtend an die zugehörigen Anlageflächen am Steckteil 3 beziehungsweise Hülsenteil 5 angepresst werden.

Das Dichtelement 7 wird beim Einführen des Steckteils 3 in das Hülsenteil 5 zusammengedrückt, wobei nicht nur in die Lippen 11a und 11b, sondern insbesondere in den Verbindungsabschnitt 9 Kräfte eingeleitet werden, die zu einer inneren Vorspannung des Dichtelements führen. Diese innere Vorspannung bewirkt eine Aufspreizkraft, aufgrund derer die Lippen 11a und 11b dichtend an die zugehörigen Anlageflächen gepresst werden.

Vorzugsweise ist das Dichtelement elastisch verformbar, so dass ein mehrmaliges Lösen und Kuppeln der Schnellkupplung möglich ist. Beim Lösen der Schnellkupplung nimmt das Dichtelement wieder seine ursprüngliche Form an. Werkstoffbedingte, die Dichtheit einer Verbindung maßgeblich beeinflussende Druckverformungsreste, wie sie bei herkömmlichen O-Ringen gegeben sind, können durch die Verwendung der hier vorgestellten Dichtelemente eliminiert werden. Außerdem wird auch in diesem Fall das Dichtelement 7 durch die in dem von den Lippen 11a, 11b eingeschlossenen Innenraum wirkenden Druckkräfte aufgespreizt und dichtend an das Steckteil beziehungsweise Hülsenteil angepresst.

Das Dichtelement 7 kann aus einem federnden Metall, vorzugsweise Federstahl oder dergleichen, aber auch aus einem Weichmetall, vorzugsweise Messing, Kupfer, Aluminium, Bronze oder dergleichen, hergestellt werden. Wesentlich ist, dass in allen Fällen eine optimale Dichtung im Bereich der Schnellkupplung 1 gewährleistet ist, die bei steigendem Betriebsdruck sogar noch erhöht wird.

In allen Fällen ist eine hohe chemische Medienbeständigkeit aufgrund der metallischen Werkstoffe sichergestellt. Auch die Temperaturbeständigkeit ist wesentlich besser als bei herkömmlichen O-Dichtungen aus Elastomeren.

Besonders vorteilhaft ist es, dass bestehende Schnellkupplungen mit übersehbar geringem Aufwand nachgerüstet werden können, um Dichtelemente der hier beschriebenen Art einsetzen zu können.

Als besonders vorteilhaft hat sich auch herausgestellt, dass bei Verwendung des hier dargestellten Dichtelements 7 ein Axialspiel innerhalb der Schnellkupplung 1 praktisch völlig vermieden werden kann, wodurch die dynamische Beständigkeit verbessert wird. Dies wird durch die Federwirkung bzw. durch die innere Vorspannung des Dichtelements 7 gewährleistet, die auch Fertigungstoleranzen ausgleichen kann. Durch die Vorspannung liegt das Steckteil 3 mit dem Hülsenteil 5 quasi stets auf Block.

Weiter verbessert wird die Dichtwirkung dadurch, dass mit steigendem Innendruck der Verbindung das Dichtelement zusammengedrückt wird, wodurch die Anpresskraft des Dichtabschnitts 27 auf die Anlageflächen des Steckteils 3 und des Hülsenteils 5 erhöht wird.

Betrachtet man insbesondere die Figuren 2, 6 und 10 so zeigt sich, dass das als Federelement wirkende Dichtelement 7 in geschlossenem Zustand der Schnellkupplung 1 mit einem ersten Schrägbereich 21 des Steckteils 3 zusammenwirkt, so dass grundsätzlich eine Kraft aufgebaut wird, die das Steckteil 3 aus dem Hülsenteil 5 herausdrängt. Die Darstellung in der genannten Figur lässt erkennen, dass im zusammengesteckten Zustand der Schnellkupplung 1 das Halteelement 17 so mit dem zweiten Schrägbereich 25 des Steckteils 3 zusammenwirkt, dass dieses in das Innere des Hülsenteils 5 hineingedrängt wird.

Ist das Halteelement 17 als vorzugsweise vollständig umlaufender Ring ausgebildet, stützt dieses sich zusätzlich an dem ersten Schrägbereich 23 des Hülsenteils 5 ab. Diese Art der Verbindung zwischen dem Steckteil 3 und dem Hülsenteil 5 wird vom Fachmann auch Schnappverbindung genannt.

Die Figuren 2, 6 und 10 lassen also erkennen, dass das Dichtelement 7, das als Federelement wirkt, und das Halteelement 17, das ebenfalls als Federelement wirkt, einander entgegengesetzte Kräfte entwickeln. Dies führt dazu, dass die Federwirkung des Dichtelements 7 das Steckteil 3 aus dem Hülsenteil 5 herausdrängt, wenn das Halteelement 17 nicht vollständig in den zweiten Schrägbereich 25 eingreift. Das Dichtelement 7 drängt also das Steckteil 3 aus dem Hülsenteil 5 heraus, wenn die Schnellkupplung 1 nicht ordnungsgemäß vollständig geschlossen ist. Durch die entsprechende Anordnung der Schrägbereiche 21 und 25 und durch die Federwirkung des Dichtelements 7 und des Halteelements 17 wird also eine Sicherungsfunktion erreicht: Ein nicht vollständiges Einstecken des Steckteils 3 in das Hülsenteil 5 wird dadurch angezeigt, dass das elastisch federnde Dichtelement 7 das Steckteil 3 aus dem Hülsenteil 5 herausschiebt, wenn das Halteelement 17 nicht korrekt eingerastet ist. Es ergibt sich damit eine Anzeige einer korrekten und leckagefreien Verbindung der Schnellkupplung 1.

Aus dem oben Gesagten wird deutlich, dass das Verfahren zum Zusammensetzen der Schnellkupplung 1 sehr einfach ist. Das Dichtelement 7 kann mit Hilfe eines Montagedorns leicht in die zugehörige Nut 13 im Hülsenteil 5 eingebracht werden, wo dieses axial fixiert wird. Werden die Teile der Schnellkupplung 1 korrekt ineinander gesteckt, stützt sich das Halteelement 17, das ebenfalls leicht in die zugehörige Nut 19 einbringbar ist, an dem zweiten Schrägbereich 25 des Steckteils 3 ab und überwindet damit die von dem Dichtelement 7 über den ersten Schrägbereich 21 eingeleiteten Kräfte. Der Dichtabschnitt 27 der unteren Lippe 11b erstreckt sich über einen Teil der unteren gebogenen Lippe 11b, so dass sich ein besonders großer Dichtabschnitt ergibt.

## Patentansprüche

1. Schnellkupplung (1) mit einem Steckteil (3), einem Hülsenteil (5) und mindestens einem Dichtelement (7) das zwei sich von einem elastischen Verbindungsabschnitt (9) aus erstreckende Lippen (11) umfasst, **dadurch gekennzeichnet, dass** das Dichtelement (7) im Wesentlichen J-förmig ausgebildet ist, wobei mindestens eine der Lippen (11b) bei gelöster Schnellkupplung (1) im Querschnitt betrachtet gebogen ist und vom Verbindungsabschnitt (9) im Wesentlichen zur Mittelachse der Schnellkupplung (1) weist und eine Lippe (11a) sich im Wesentlichen rechtwinklig zu der anderen Lippe (11 b) von dem Verbindungsabschnitt (9) weg erstreckt.

2. Schnellkupplung nach Anspruch 1, **dadurch gekennzeichnet, dass** das Dichtelement (7) Dichtabschnitte (27) aufweist, die bei geschlossener Schnellkupplung (1) mit der Oberfläche des Steckteils (3) und der Oberfläche des Hülsenteils (5) in Berührverbindung stehen.

3. Schnellkupplung nach einem der vorhergehenden Ansprüche, **dadurch gekennzeichnet, dass** das Dichtelement (7) plastisch oder elastisch verformbar ist.

4. Schnellkupplung nach einem der vorhergehenden Ansprüche, **dadurch gekennzeichnet, dass** das Dichtelement (7) federndes Metall, vorzugsweise Federstahl oder dergleichen, oder Weichmetall, vorzugsweise Messing, Kupfer, Aluminium, Bronze oder dergleichen, umfasst.

5. Schnellkupplung nach einem der vorhergehenden Ansprüche, **dadurch gekennzeichnet, dass** das Dichtelement (7) sich bei geschlossener Schnellkupplung in einer Nut (13) des Hülsenteils (5) und/oder an einem ersten Schrägbereich (21) des Steckteils (3) abstützt.

6. Schnellkupplung nach einem der vorhergehenden Ansprüche, **dadurch gekennzeichnet, dass** der Schnellkupplung (1) ein Halteelement (17) zugeordnet ist, das sich bei gelöster Schnellkupplung (1) an einer Ausnehmung (19) im Hülsenteil (5) und an dem ersten Schrägbereich (21) des Steckteils (3) abstützt.

7. Schnellkupplung nach einem der vorhergehenden Ansprüche, **dadurch gekennzeichnet, dass** das Halteelement (17) sich bei geschlossener Schnellkupplung an einem ersten Schrägbereich (23) des Hülsenteils (5) und einem zweiten Schrägbereich (25) des Steckteils (3) abstützt.

8. Schnellkupplung nach einem der vorhergehenden Ansprüche, **dadurch gekennzeichnet, dass** die Oberfläche des Steckteils (3) eine Schrägfläche (21) aufweist, mit der das Dichtelement (7) so zusammenwirkt, dass bei nicht vollständig geschlossener Schnellkupplung (1) durch die Federwirkung des Dichtelements (7) das Steckteil (3) aus dem Hülsenteil (5) herausgedrückt wird.

9. Schnellkupplung nach einem der vorhergehenden Ansprüche, **dadurch gekennzeichnet, dass** sie von einem Medium durchströmbar ist.

10. Schnellkupplung nach einem der vorhergehenden Ansprüche, **dadurch gekennzeichnet, dass** das Medium eine Flüssigkeit, vorzugsweise R12, R134-a, ATF, Pentosin, Motorenöl, Getriebeöl, Ottokraftstoff, Dieselkraftstoff, Kerosin, Wasser oder dergleichen, ist.

11. Schnellkupplung nach einem der vorhergehenden Ansprüche, **dadurch gekennzeichnet, dass** das Medium ein Gas, vorzugsweise Luft, Kohlendioxid, Propan, Isobutan oder dergleichen, ist.

## Claims

1. Quick-action coupling (1) having a male part (3), a female part (5) and at least one sealing member (7) which comprises two lips (11) extending out from an elastic connecting portion (9), **characterised in that** the sealing member (7) is substantially J-shaped in configuration, at least one (11b) of the lips being curved, when seen in cross-section, when the quick-action coupling (1) is released and pointing from the connecting portion (9) substantially towards the centre axis of the quick-action coupling (1), and one lip (11a) extending away from the connecting portion (9) substantially at right angles to the other lip (11 b).

2. Quick-action coupling according to claim 1, **characterised in that** the sealing member (7) has sealing portions (27) which, when the quick-action coupling (1) is closed, are in contacting connection with the surface of the male part (3) and with the surface of the female part (5).

3. Quick-action coupling according to one of the foregoing claims, **characterised in that** the sealing member (7) is plastically or elastically deformable.

4. Quick-action coupling according to one of the foregoing claims, **characterised in that** the sealing member (7) comprises resilient metal, preferably spring steel or the like, or soft metal, preferably brass, copper, aluminium, bronze or the like.

5. Quick-action coupling according to one of the foregoing claims, **characterised in that**, when the quick-action coupling is closed, the sealing member (7) is supported in a groove (13) in the female part (5) and/or on a first inclined region (21) of the male part (3).

6. Quick-action coupling according to one of the foregoing claims, **characterised in that** the quick-action coupling (1) has associated with it a retaining member (17) which, when the quick-action coupling (1) is released, is supported against a recess (19) in the female part (5) and on a first inclined region (21) of the male part (3).

7. Quick-action coupling according to one of the foregoing claims, **characterised in that**, when the quick-action coupling is closed, the retaining member (17) is supported on a first inclined region (23) of the female part (5), and on a second inclined region (25) of the male part (3).

8. Quick-action coupling according to one of the foregoing claims, **characterised in that** the surface of the male part (3) has an inclined face (21) with which the sealing member (7) co-operates in such a way that, if the quick-action coupling (1) is not completely closed, the male part (3) is pressed out of the female part (5) by the spring action of the sealing member (7).

9. Quick-action coupling according to one of the foregoing claims, **characterised in that** a medium is able to flow through it.

10. Quick-action coupling according to one of the foregoing claims, **characterised in that** the medium is a liquid, preferably R12, R134-a, ATF, pentosine, engine oil, transmission oil, petrol, diesel fuel, kerosene, water or the like.

11. Quick-action coupling according to one of the foregoing claims, **characterised in that** the medium is a gas, preferably air, carbon dioxide, propane, isobutane or the like.

## Revendications

1. Raccord rapide (1) comprenant une partie enfichable (3), une partie formant manchon (5) et au moins un élément d'étanchéité (7) qui comprend deux lèvres (11) s'étendant à partir d'une section de raccordement élastique (9),
**caractérisé en ce que** l'élément d'étanchéité (7) est configuré pratiquement en forme de J, où au moins l'une des lèvres (11 b), vue en coupe transversale, est courbe lorsque le raccord rapide (1) est desserré et, à partir de la section de raccordement (9), pointe pratiquement vers l'axe médian du raccord rapide (1), et une lèvre (11a), à partir de la section de raccordement (9), s'étend pratiquement à angle droit par rapport à l'autre lèvre (11 b).

2. Raccord rapide selon la revendication 1, **caractérisé en ce que** l'élément d'étanchéité (7) présente des sections d'étanchéité (27) qui, lorsque le raccord rapide (1) est fermé, sont en contact avec la surface de la partie enfichable (3) et avec la surface de la partie formant manchon (5).

3. Raccord rapide selon l'une des deux revendications précédentes, **caractérisé en ce que** l'élément d'étanchéité (7) est plastiquement ou élastiquement déformable.

4. Raccord rapide selon l'une quelconque des revendications précédentes, **caractérisé en ce que** l'élément d'étanchéité (7) comprend un métal élastique, de préférence un acier pour ressorts ou un acier analogue, ou bien un métal doux, de préférence du laiton, du cuivre, de l'aluminium, du bronze ou un métal doux analogue.

5. Raccord rapide selon l'une quelconque des revendications précédentes, **caractérisé en ce que** l'élément d'étanchéité (7), lorsque le raccord rapide est fermé, s'appuie dans une rainure (13) de la partie formant manchon (5) et/ou sur une première zone inclinée (21) de la partie enfichable (3).

6. Raccord rapide selon l'une quelconque des revendications précédentes, **caractérisé en ce qu'**un élément de maintien (17) est associé au raccord rapide (1), lequel élément de maintien, lorsque le raccord rapide (1) est desserré, s'appuie sur un évidement (19) dans la partie formant manchon (5) et sur la première zone inclinée (21) de la partie enfichable (3).

7. Raccord rapide selon l'une quelconque des revendications précédentes, **caractérisé en ce que** l'élément de maintien (17), lorsque le raccord rapide est fermé, s'appuie sur une première zone inclinée (23) de la partie formant manchon (5) et sur une seconde zone inclinée (25) de la partie enfichable (3).

8. Raccord rapide selon l'une quelconque des revendications précédentes, **caractérisé en ce que** la surface de la partie enfichable (3) présente une surface inclinée (21) avec laquelle l'élément d'étanchéité (7) coopère de manière telle que, lorsque le raccord rapide (1) n'est pas complètement fermé, la partie enfichable (3), sous l'effet de ressort de l'élément d'étanchéité (7), soit repoussée à l'extérieur de la partie formant manchon (5).

9. Raccord rapide selon l'une quelconque des revendications précédentes, **caractérisé en ce qu'**il peut être traversé par un milieu en circulation.

10. Raccord rapide selon l'une quelconque des revendications précédentes, **caractérisé en ce que** le milieu en circulation est un liquide, de préférence un liquide de type R12, de type R134-a, un fluide pour transmissions automatiques (ATF), du pentosène, de l'huile pour moteurs, de l'huile pour transmissions, de l'essence, du gazole, du kérosène, de l'eau ou un liquide analogue.

11. Raccord rapide selon l'une quelconque des revendications précédentes, **caractérisé en ce que** le milieu en circulation est un gaz, de préférence de l'air, du dioxyde de carbone, du propane, de l'isobutane ou un gaz analogue.
